# EUROPEAN PATENT SPECIFICATION

(11) **EP 0 287 108 B1**
(45) Date of publication and mention of the grant of the patent: **22.09.1993**
(21) Application number: 88106032.1
(22) Date of filing: 15.04.1988
(51) Int. Cl.: G05D 23/24, B60H 1/00

(54) **Measuring circuit for use in device for detecting ambient air temperature**
Messschaltung zur Verwendung in einer Vorrichtung zur Erfassung der Umgebungslufttemperatur
Circuit de mesure utilisé dans un dispositif de détection de température d'air ambiant

(30) Priority: 15.04.1987 JP 57297/87 U
(43) Date of publication of application: 19.10.1988
(73) Proprietor: SANDEN CORPORATION, Isesaki-shi Gunma, 372 (JP)
(72) Inventor: Hoshino, Siiechi, Nitta-gun Gunma, 370-03 (JP); Tamura, Yasuji, Nitta-gun Gunma, 370-04 (JP); Akabane, Hidemitsu, Takasaki-shi Gunma 370 (JP); Isobe, Toshimi, Isesaki-shi Gunma 372 (JP)
(74) Representative: Prüfer, Lutz H., Dipl.-Phys.

(56) References cited:
- DE-A- 3 029 097
- US-A- 4 269 351
- US-A- 4 617 986

## Description

This invention relates to an automotive air conditioning system, and more particularly, to a measuring circuit for use in a device for detecting an ambient air temperature which is used in an automotive air conditioning system.

In an automotive air conditioning system which has an automatic control device, the automotive control device conventionally includes a control circuit which compares a predetermined temperature, an automobile compartment air temperature and an ambient air temperature and controls the opening angle of a air mix damper for controlling heated air and cooled air by operating an actuator based on an output signal of the control circuit, thereby the temperature of the air blown out from an air duct of the air conditioning system can be adjusted in a desirable temperature.

In the above automotive air conditioning system, an ambient air temperature sensor for detecting an ambient air temperature is conventionally attached at the portion of a front grille of an automobile so that the ambient air temperature sensor can accurately detect the ambient air temperature during driving of the automobile. However, when the automobile idles, the ambient air temperature sensor results in detecting a higher temperature than the actual ambient air temperature since the ambient air temperature is affected by the waste heat of an automobile engine.

For the purpose of resolving the above problem, it is conventionally proposed to use an ambient air temperature sensor which has a large heat capacity to delay a response speed or a control circuit which delays a response speed to a temperature which is detected by an ambient air temperature sensor which has a small heat capacity for a certain time. Pursuant to delaying a response speed to variance of temperature, the number of control of the opening angle of the damper can be prevented from increasing.

In spite of the above solution, when an automobile idles for a long time, an ambient air temperature sensor is heated until too high temperature by the waste heat of the automobile engine, thereby the ambient air temperature data which is detected by the ambient air temperature sensor is extremely high as compared with an actual ambient air temperature. In the above condition, when the automobile starts to drive, the ambient air temperature which is detected by the ambient air temperature sensor quickly decreases to an actual ambient air temperature. However, the ambient air temperature data which is maintained by the control device does not quickly equal the actual ambient air temperature since the conventional control device is predetermined to delay the response speed of the ambient air temperature data to the actual ambient air temperature for a certain time. Accordingly, the opening angle of the damper is less than a desirable angle until the detected ambient air temperature data equals the actual ambient air temperature, thereby the heating for the automobile compartment is insufficient for a certain time.

It is an object of this invention to provide a measuring circuit for use in a device for detecting an ambient air temperature which can suitably control an automobile compartment air temperature.

It is another object of this invention to provide a measuring circuit for use in a device for detecting an ambient air temperature which can resolve the insufficiency of the heating at start of driving of an automobile.

These objects are achieved by a device for controlling an opening angle of an air mix damper as defined in claim 1.

Further objects, features and other aspects of this invention will be understood from the detailed description of the preferred embodiments of this invention.

Fig. 1 is a schematic view of an automotive air conditioning system applicable of this invention.

Fig. 2 is a block diagram which shows a measuring circuit for use in a device for detecting an ambient air temperature in accordance with a first embodiment of this invention.

Fig. 3 is a flow chart which illustrates the operation of the first embodiment of this invention.

Fig. 4 is a graphical illustration of a response speed of control to an actual ambient air temperature in the first embodiment of this invention.

Fig. 5 is a block diagram which shows a measuring circuit for use in a device for detecting an ambient air temperature in accordance with a second embodiment of this invention.

Fig. 6 is a flow chart which illustrates the operation of the second embodiment of this invention.

Fig. 7 is a block diagram which shows a measuring circuit for use in a device for detecting an ambient air temperature in accordance with a third embodiment of this invention.

Fig. 8 is a flow chart which illustrates the operation of the third embodiment of this invention.

Fig. 9 is a graphical illustration of a response speed of control to an actual ambient air temperature in the third embodiment of this invention.

Fig. 10 is a block diagram which shows a measuring circuit for use in a device for detecting an ambient air temperature in accordance with a fourth embodiment of this invention.

Fig. 11 is a flow chart which illustrates the operation of the fourth embodiment of this invention.

Fig. 12 is a block diagram which shows a measuring circuit for use in a device for detecting an ambient air temperature in accordance with a fifth embodiment of this invention.

Fig. 13 is a flow chart which illustrates the operation of the fifth embodiment of this invention.

Fig. 14 is a graphical illustration of a response speed of control to an actual ambient air temperature in the fifth embodiment of this invention.

Fig. 15 is a block diagram which shows a measuring circuit for use in a device for detecting an ambient air temperature in accordance with a sixth embodiment of this invention.

Fig. 16 is a flow chart which illustrates the operation of the sixth embodiment of this invention.

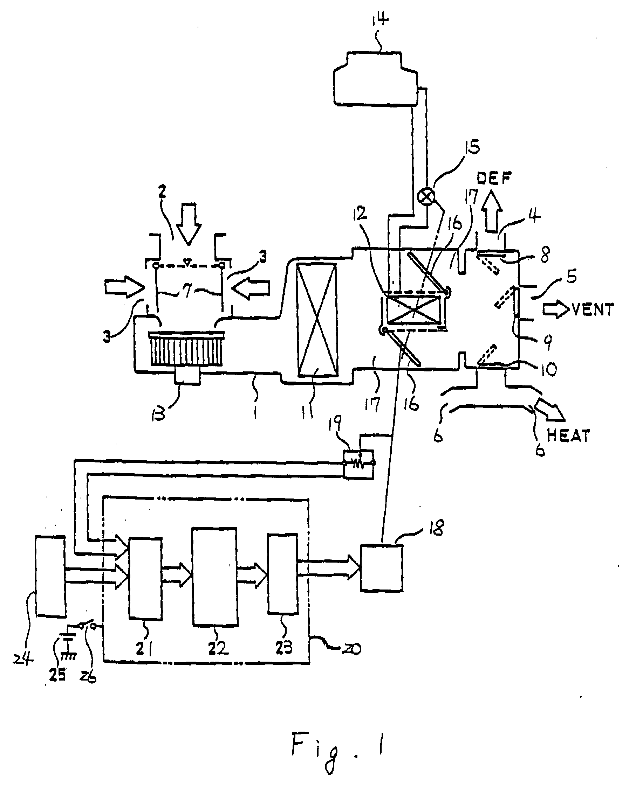

Referring first to Fig. 1, the arrangement of an automotive air conditioning system applicable of this invention is shown.

Duct 1 has fresh air inlet 2 and recirculated air inlet 3 at its upstream end, and defroster air outlet 4, upper air outlet 5 and lower air outlet 6 at its downstream end. Arranged in duct 1 are first selector damper 7 disposed to selectively assume a recirculated air intaking position or a fresh air intaking position, second selector damper 8 disposed to selectively assume a defroster discharge position or a closed position, a third selector damper 9 disposed to selectively assume an upper discharge position or a closed position and a fourth selector damper 10 disposed to selectively assume a lower discharge position or a closed position. Also provided at an axially intermediate location in duct 1 are evaporator 11 and heater core 12, the latter being downstream of the former. Blower 13 is also provided at upstream of evaporator 11 in duct 1. Evaporator 11 is a part of a refrigerating circuit and heater core 12 is heated by cooling water for automobile engine 14. The volume of cooling water flown into heater core 12 is controlled by water valve 15 which is disposed at the conduit between heater core 12 and engine 14. Air mix dampers 16 are provided at both sides of heater core 12 and adjusts the proportion of the volume of the air which passes through heater core 12 to the volume of the air which passes bypass 17 thereby controlling a degree of heating of the air by heater core 12. Air mix damper 16 is mechanically coupled with water valve 15 through a wire, link or the like, to be operated together and is operated by actuator 18 which is also coupled with air mix damper 16 through a wire. A potentiometer 19 is provided in actuator 18 and electrically communicates the position of actuator 18 to control a device 20.

Control device 20 includes A/D converter 21, micro-computer 22 and driver 23, each of which is connected with each other in order. Potentiometer 19 and a plurality of sensors 24, for example, a room air temperature sensor, an ambient air temperature sensor, an evaporator temperature sensor, a water temperature sensor, a sunlight temperature sensor, etc., are connected to control device 20, respectively and control device 20 is connected to actuator 18. Also, control device 20 is connected to battery 25 through ignition switch 26. Micro-computer 22 computes the temperature of the air blown out to an automobile compartment based on signals detected at sensors 24 and outputs signals to actuator 18 and blower 13 to control the opening angle of air mix damper 16 and the voltage of blower 13.

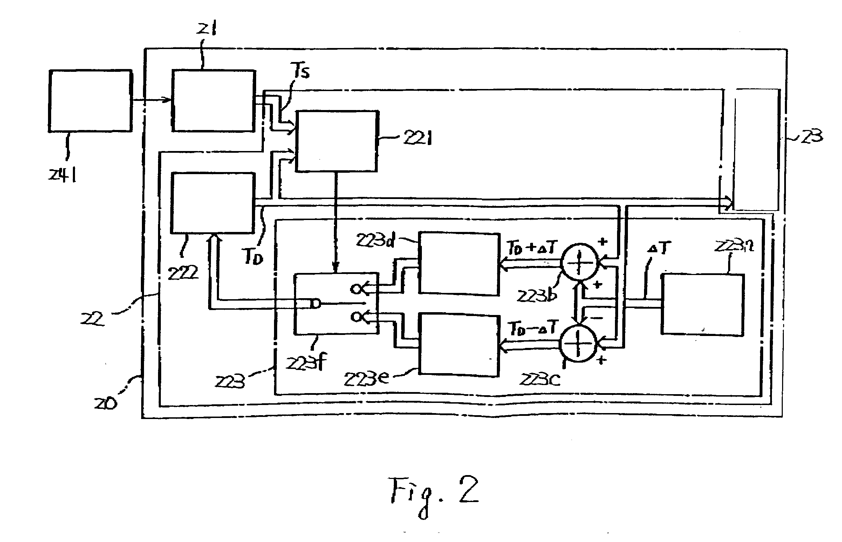

With reference to Fig. 2, a block diagram of a measuring circuit for use in a device for detecting an ambient air temperature in accordance with a first embodiment of this invention is shown. Control device 20 comprises A/D converter 21, micro-computer 22 and driver 23, each of which is connected with each other, as mentioned above. Micro-computer 22 comprises compare means 221, ambient air temperature resistor 222 and central processing unit 223. Micro-computer 22 receives a signal for detected temperature Ts detected at ambient air temperature sensor 241 through A/D converter 21 and computes ambient air temperature data Td necessary for controlling an automotive air conditioning system based on detected temperature Ts as mentioned below. Ambient air temperature sensor 241 is disposed on a front part and preferably on a front grille.

Ambient air temperature resistor 222 maintains ambient air temperature data Td. Compare means 221 compares detected temperature Ts which is output from A/D converter 21 with ambient air temperature data Td which is output from ambient air temperature resistor 222. If detected temperature Ts is greater than temperature data Td, compare means 221 outputs a first selective control signal. Otherwise, compare means 221 outputs a second selective control signal. Central processing unit 223 transacts temperature data Td in a first or second response speed, each of which is different to each other, in response to the first or second selective control signal and outputs the data which is transacted by itself as a new temperature data Td to temperature resistor 222. In this embodiment, the first response speed is predetermined to be less than the second response speed.

Central processing unit 223 includes temperature change rate maintaining means 223a which maintains predetermined temperature change rate Δ T, adding means 223b, deduction means 223c, first delay means 223d, second delay means 223e and selective means 223f. Adding means 223b adds predetermined temperature change rate Δ T which is output from maintaining means 223a to temperature data Td and outputs a signal to first delay means 223d. Deduction means 223c deducts predetermined temperature change rate ΔT from temperature data Td and outputs a signal to second delay means 223e. First delay means 223d outputs a signal from adding means 223b to selective means 223f after a first predetermined time t1. Second delay means 223e outputs a signal from deduction means 223c to selective means 223f after a second predetermined time t2. First predetermined time t1 is predetermined to be longer than second predetermined time t2 in this embodiment. Selective means 223f selects a signal from first delay means 223d in response to the first selective control signal from compare means 221 and outputs a signal to temperature resistor 222. Contrarily, selective means 223f selects a signal from second delay means 223e in response to the second selective control signal from compare means 221 and outputs a signal to temperature resistor 222. Temperature resistor 222 inputs and maintains a signal from selective means 223f as a new temperature data.

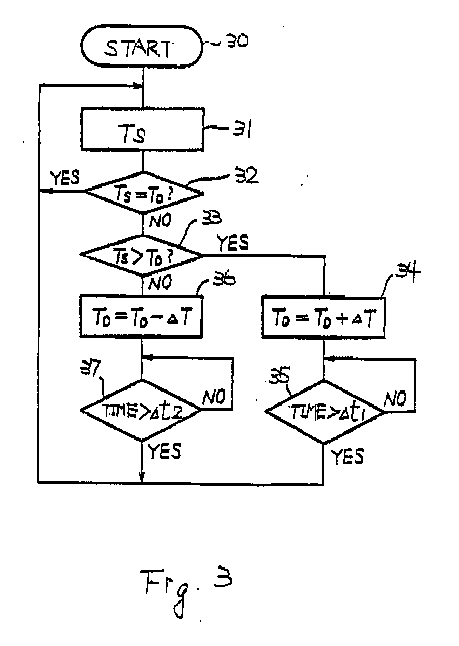

Referring to Fig. 3, a flow chart for the operation of micro-computer 22 is shown. When the automotive air conditioning system is turned on in step 30, ambient air temperature sensor 241 detects the ambient air temperature and outputs detected temperature Ts to compare means 221 through A/D converter 21 in step 31. In step 32, detected temperature Ts is compared with temperature data Td. If detected temperature Ts equals temperature data Td, control returns to step 31. Otherwise, control passes to step 33 and detected temperature Ts is compared with temperature data Td again in step 33. If detected temperature Ts is greater than temperature data Td, control passes to step 34 and compare means 221 outputs the first selective control signal to selective means 223f thereby selective means 223f selects a signal from first delay means 223d. Accordingly, in step 34, predetermined temperature change rate Δ T output from maintaining means 223a is added to temperature data Td by adding means 223b and control passes to step 35. In step 35, first delay means 223d outputs temperature data Td which is transacted at step 34 to temperature resistor 222 through selective means 223f after first predetermined time t1. Contrarily, in step 33, if detected temperature Ts is less than temperature data Td, control passes to step 36 and compare means 221 outputs the second selective control signal to selective means 223f thereby selective means 223f selects a signal from second delay means 223e. Accordingly, in step 36, predetermined temperature change rate ΔT output from maintaining means 223a is deducted from temperature data Td by deduction means 223c. In step 37, second delay means 223e outputs temperature data Td which is transacted at step 36 to temperature resistor 222 through selective means 223f after second predetermined time t2.

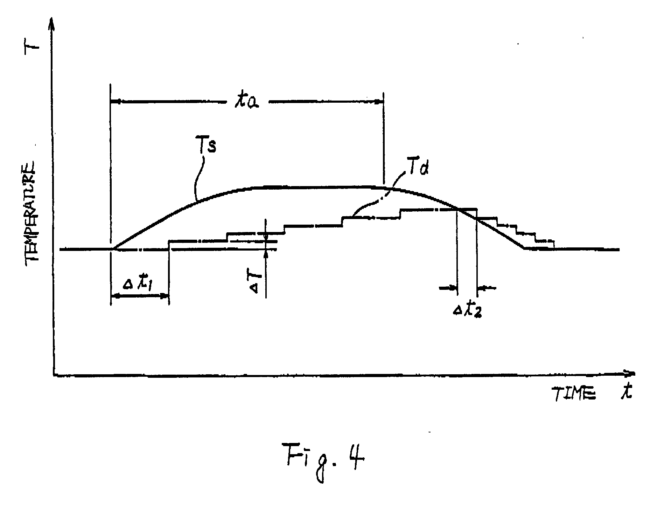

Referring to Fig. 4, a graphical illustration of a response speed of control to an actual ambient air temperature is shown. A response speed of control of ambient air temperature data Td while detected temperature Ts increases for idling time ta can be later than that while detected temperature Ts decreases pursuant to the above embodiment. Accordingly, after an automobile starts to drive, temperature data Td can be quickly approached at detected temperature Ts, which is an actual ambient air temperature.

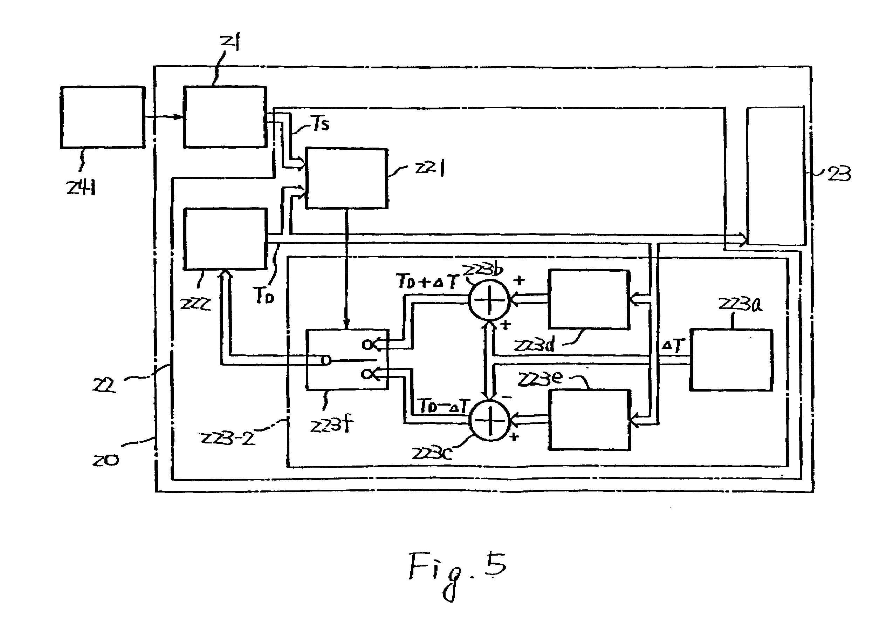

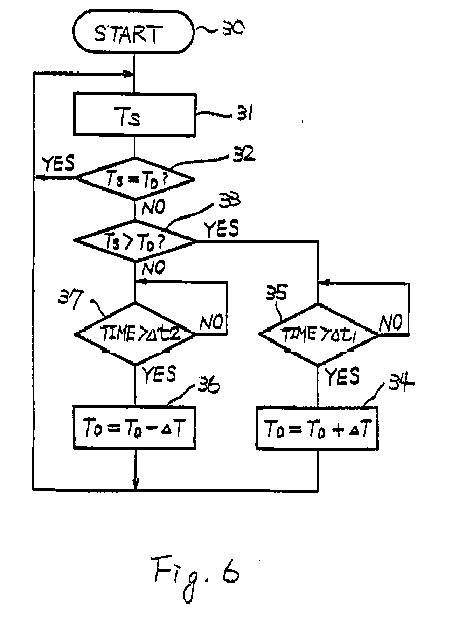

Referring to Fig. 5, a block diagram of a measuring circuit for use in a device for detecting an ambient air temperature in accordance with a second embodiment of this invention is shown. The same numerals are accorded on the same construction as that in the first embodiment of this invention and the description of the construction is omitted to simplify the specification. In this embodiment, it is only the only difference between the above both embodiments that the order of first delay means 223d to adding means 223b and second delay means 223e to deduction means 223c in central processing unit 223-2 are contrary, respectively. Accordingly, as to the order of the operation, steps 34 and 35, and steps 36 and 37 are contrary, respectively as shown in a flow chart in Fig. 6. The other construction and operation of this embodiment is the same as that of the first embodiment thereby the response speed of temperature data Td to detected temperature Ts is the same as that shown in Fig. 4.

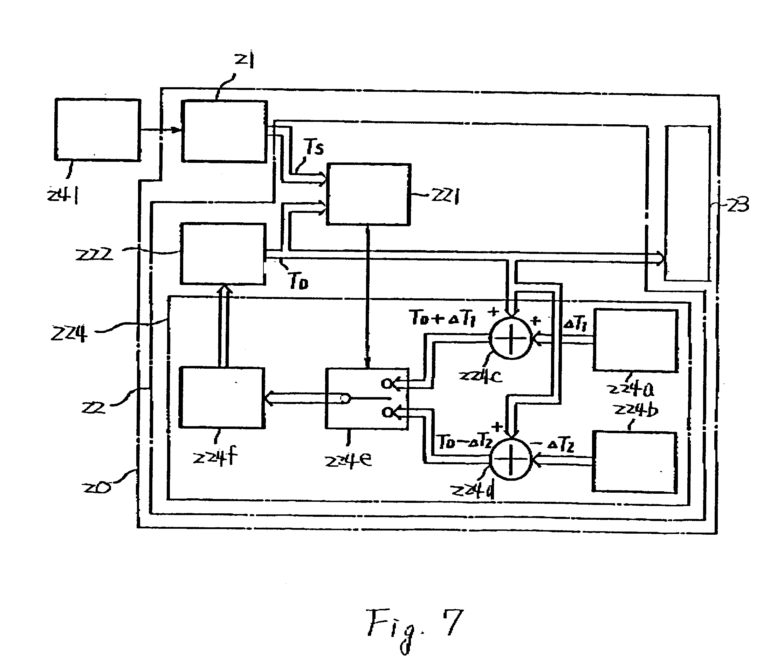

Referring to Fig. 7, a block diagram of a measuring circuit for use in a device for detecting an ambient air temperature in accordance with a third embodiment of this invention is shown. Micro-computer 22 comprises compare means 221, ambient air temperature resistor 222 and central processing unit 224. The construction of central processing unit 224 different from the above embodiments is described below.

Central Processing unit 224 includes first temperature change rate maintaining means 224a which maintains first predetermined temperature change rate Δ T1, second temperature change rate maintaining means 224b which maintains second predetermined temperature change rate Δ T2, adding means 224c, deduction means 224d, selective means 224e and delay means 224f. Adding means 224c adds first predetermined temperature change rate Δ T1, which is output from first maintaining means 224a, to temperaure data Td, which is output from temperature resistor 222 and outputs a signal to selective means 224e. Deduction means 224d deducts temperature change rate Δ T2, which is output from second maintaining means 224b, from temperature data Td and outputs a signal to selective means 224e. Selective means 224e selected a signal from adding means 224c in response to the first selective control signal from compare means 221 and outputs a signal to delay means 224f. Alternatively, selective means 224e selects a signal from deduction means 224d in response to the second selective control signal from compare means 221 and outputs a signal to delay means 224f. Delay means 224f outputs a signal from selective means 224e after predetermined delay time Δ t to temperature resistor 222. Temperature resistor 222 inputs and maintains a signal from delay means 224f as a new temperature data.

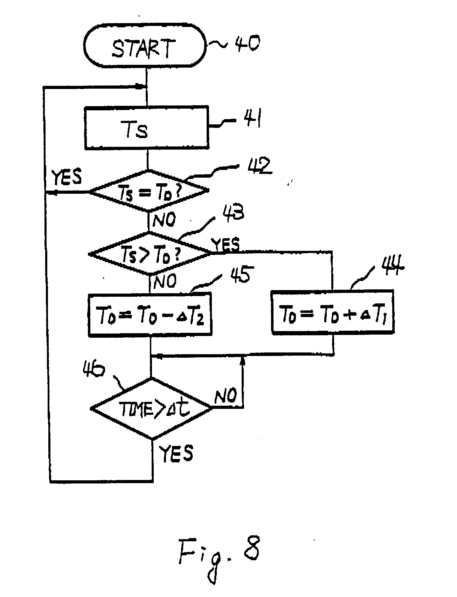

Referring to Fig. 8, a flow chart for the operation of micro-computer 22 in accordance with a third embodiment of this invention is shown. When the automotive air conditioning system is turned on in step 40, ambient air temperature sensor 241 detects the ambient air temperature and outputs detected temperature Ts through A/D convecter 21 to compare means 221 in step 41. In step 42, detected temperature Ts is compared with temperature data Td. If detected temperature Ts equals temperature data Td, control returns to step 41. Otherwise, control passes to step 43 and detected temperature Ts is compared with temperature data Td again in step 43. If detected temperature Ts is greater than temperature data Td, control passes to step 44 and compare means 221 outputs the first selective control signal to selective means 224e thereby selective means 224e selects a signal from adding means 224c. Accordingly, in step 44, first predetermined temperature change rate Δ T1 output from first maintaining means 224a is added to temperature data Td by adding means 224c and control passes to step 46. Also, a signal output from adding means 224c is input to delay means 224f through selective means 224e. In step 46, delay means 224f outputs temperature data Td which is transacted at step 44 to temperature resistor 222 after predetermined time Δt, and temperature data Td is maintained in temperature resistor 222 as a new temperature data. Contrarily, if detected temperature Ts is less than temperature data Td, control passes to step 45 and compare means 221 outputs the second selective control signal to selective means 224e thereby selective means 224e selects a signal from deduction means 224d. Accordingly, in step 45, second predetermined temperature change rate Ts output from second maintaining means 224b is deducted from temperature data Td by deduction means 224d and control passes to step 46. A signal output from deduction means 224d is input to delay means 224f through selective means 224e. In step 46, delay means 224f outputs temperature data Td which is transacted at step 45 to temperature resistor 222 after predetermined time Δ t and temperature data Td is maintained in temperature resistor 222 as a new temperature data. First predetermined temperature change rate Δ T1 is predetermined to be less than second predetermined temperature change rate Δ T2.

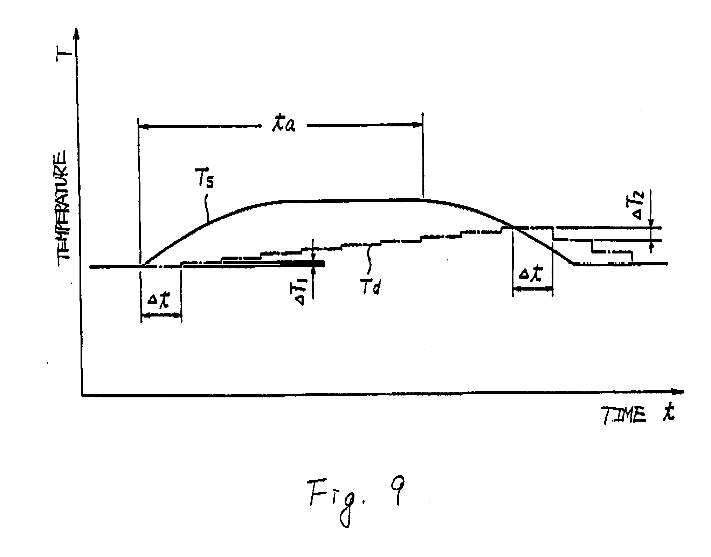

Referring to Fig. 9, a graphical illustration of a response speed of control to an actual ambient air temperature is shown. A response speed of ambient air temperture data Td while detected temperature Ts increases can be latter than that while detected temperature Ts decreases persuant to this embodiment. Accordingly, after an automobile starts to drive, temperature data Td can be quickly approached at detected temperature Ts, which is an actual ambient air temperature.

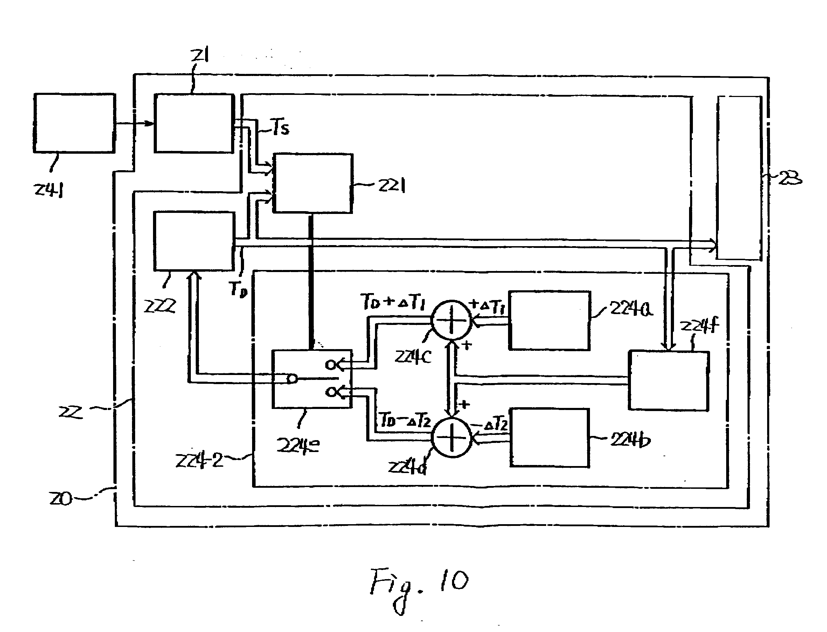

Referring to Fig. 10, a block diagram of a measuring circuit for use in a device for detecting an ambient air temperature in accordance with a fourth embodiment of this invention is shown.

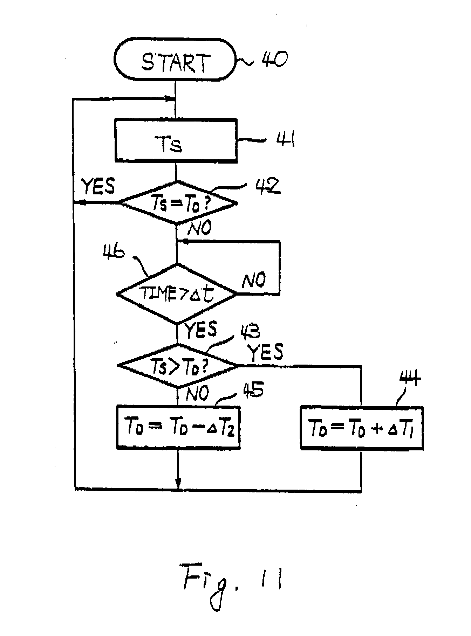

The same numerals are accroded on the same construction as that in the third embodiment of this invention and the description of the construction is omitted to simplify the specification. In the fourth embodiment, it is only defference between the third and fourth embodiments that delay means 224f in central processing unit 224-2 is disposed to be connected to the output of temperature resistor 222 at its one end and to the inputs of first and second temperature change rate maintaining means 224a and 224b at its other end, respectively. Accordingly, as to the order of the operation, step 46 is disposed between step 42 and step 43 as shown in Fig. 11. Therefore, the reponse speed of control of ambient air temperature data Td to detected temperature Ts is changed as well as the third embodiment, which is shown in Fig. 9.

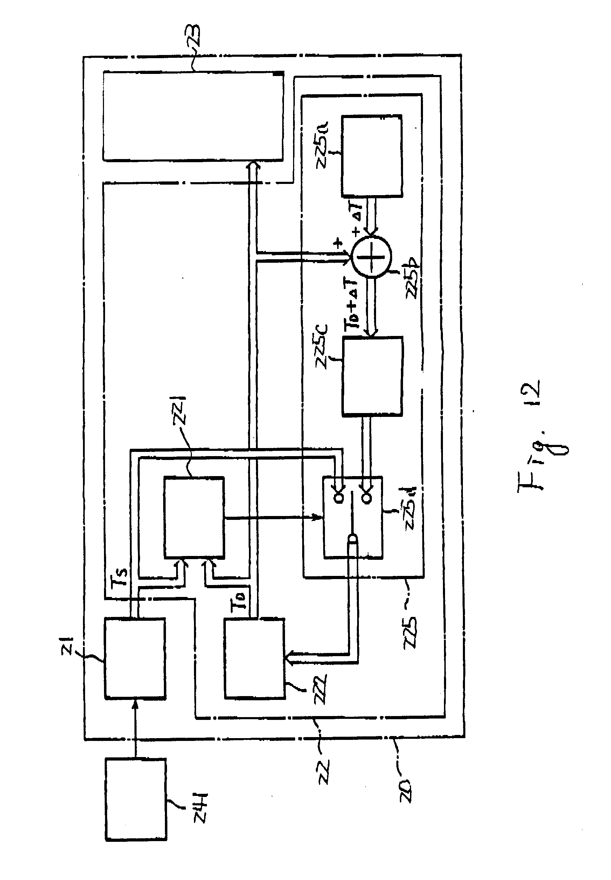

Referring to Fig. 12, a block diagram of a measuring circuit for use in a device for detecting an ambient air temperature in accordance with fifth embodiment of this invention is shown. The construction of central processing unit 225 is different from the above embodiments is described below.

Control processing unit 225 includes temperature change rate maintaining means 225a which maintains predetermined temperature change rate Δ T, adding means 225b, delay means 225c, and selective means 225d. Adding means 225b adds predetermined temperature change rate ΔT, output from temperature maintaining means 225a, to temperature data Td and outputs a signal to selective means 225d after predetermined time Δ t. A/D convecter 21 outputs a signal to compare means 221 and selective means 225d. Selective means 225d selects an output from delay means 225c in response to the first selective control signal from compare means 221. Alternatively, selective means 225d selects detected temperature Ts from A/D converter 21 in response to the second selective control signal from compare means 221. Accordingly, selective means 225d output a signal to temperature resistor 222 in response to a control signal from compare means 221 to temperature resistor 222 and temperature resistor 222 maintains the signal from selective means 225d as a new temperature data.

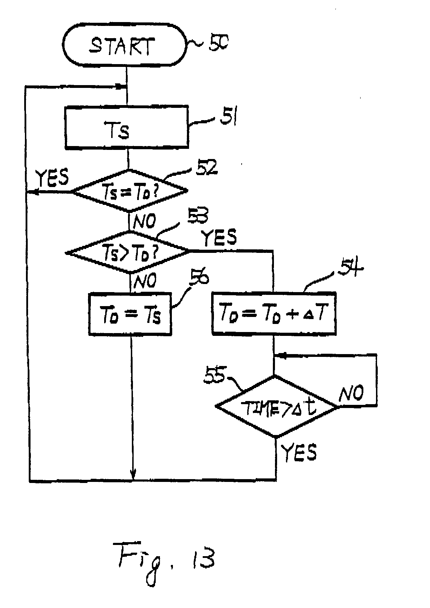

Referring to Fig. 13, a flow chart for the operation of micro-computer 22 in accordance with the fifth embodiment is shown. When the automotive air conditioning system is turned on in step 50, ambient air temperature sensor 24 detects the ambient air temperature and outputs detected temperature Ts to compare means 221 through A/D convecter 21 in step 51. Control passes to step 52 from step 51. In step 52, detected temperature Ts in compared with temperature data Td. If detected temperature Ts equals temperature data Td, control returns to step 51. Otherwise, control passes to step 53 and detected temperature Ts is compared with temperature data Td again in step 53. If detected temperature Ts is greater than temperature data Td, control passes to step 54 and compare means 221 outputs the first selective control signal to selective means 225d thereby selective means 225d selects a signal from delay means 225c. Accordingly, in step 54, adding means 225b adds predetermined temperature change rate Δ T which is output from temperature maintaining means 225a to temperature data Td and outputs a signal to delay means 225c. Delay means 225c outputs a signal to temperature resistor 222 through selective means 225d after predetermined time Δ t in step 55. Contrarily, in step 53, if detected temperature Ts is less than temperature data Td, control passes to step 56 and compare means 221 outputs the second selective control signal to selective means 225d thereby selective means 225d selects a signal from A/D converter 21 and outputs the signal to temperature resistor 222 through selective means 225d. Therefore, temperature resistor 222 maintains detected temperature Ts as a new temperature data Td in step 56.

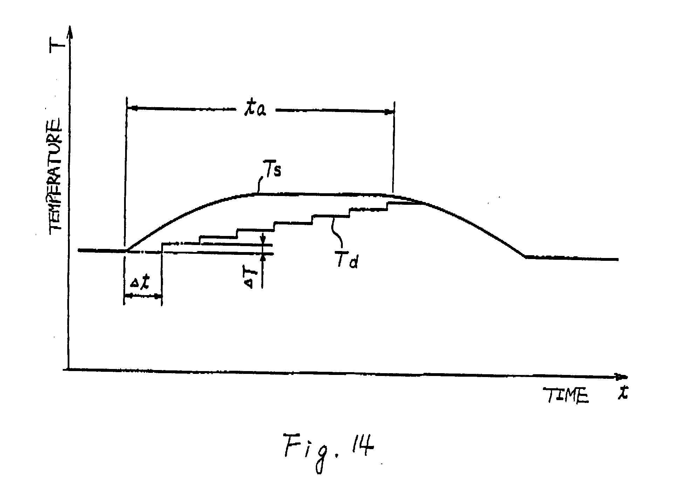

With reference to Fig. 14, a graphical illustration of a response speed of control to an actual ambient air temperature is shown. Temperature data Td increases with a time lag late for increase of detected temperature Ts when detected temperature Ts increases. Contrarily, when detected temperature Ts decreases, temperature data Td equals detected temperature Ts. Accordingly, after an automobile starts to drive, temperature data Td can be quickly approached at detected temperature Ts, which is an actual ambient air temperature.

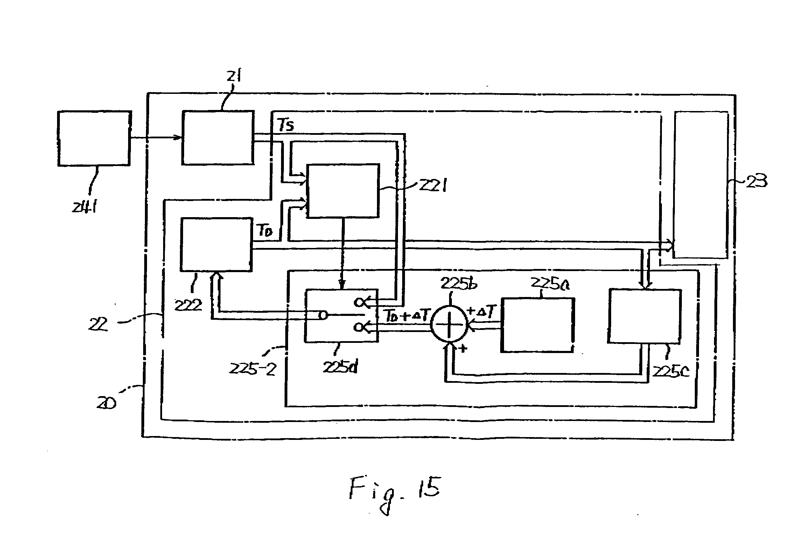

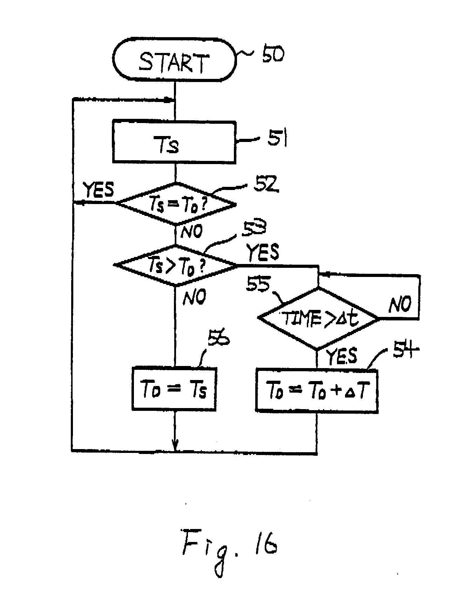

Referring to Fig. 15, a block diagram of a measuring circuit for use in a device for detecting an ambient air temperature in accordance with a sixth embodiment of this invention is shown. The same numerals are accorded on the same construction as that in the fifth embodiment of this invention and the description of the construction is omitted to simplify the specification. In this embodiment, it is only difference between the fifth and sixth embodiments that delay means 225c is disposed between the output of temperature resistor 222 and adding means 225b and adding means 225b is directly connected to selective means 225d. Accordingly, as to the order of the operation, step 55 is disposed forward of step 54 as shown in a flow chart in Fig. 16. The other construction and operation of this embodiment is the same as that of the fifth embodiment thereby the response speed of control of temperature data Td to detected temperature Ts is the same as that shown in Fig. 14.

## Claims

1. A device for controlling an opening angle of an air mix damper (16) used in an automobile air conditioning system having an actuator for operating the air mix damper (16) and a blower (13) for blowing the air, said device comprising
ambient air temperature sensor means (241) disposed on a front part of the automobile for detecting an ambient air temperature outside the automobile,
characterized in that said device further comprises
calculating means for calculating ambient air temperature data used for controlling said actuator and blower, said calculating means including
ambient air temperature storage means (222) for storing said ambient air temperature data,
comparing means (221) for comparing an ambient air temperature detected by said sensor means with said stored ambient air temperature data and providing a first selective control signal when said detected ambient air temperature is greater than said stored ambient air temperature data and a second selective control signal when said detected ambient air temperature is less than said stored ambient air temperature data, and
adjustment means (223) for adjusting said ambient air temperature data with a first response speed in response to said first selective control signal and a second response speed in response to said second selective control signal and providing said adjusted ambient air temperature data to said ambient air temperature storage means (222).

2. The device of claim 1 wherein said first response speed is less than said second response speed.

3. The device of claim 1 or 2 wherein said adjustment means (223) comprising
maintaining means (223a) for maintaining a predetermined temperature change rate,
adding means (223b) for adding said predetermined temperature change rate to said ambient air temperature data and providing a first control signal, deduction means (223c) for deducting said predetermined temperature change rate from said ambient air temperature data and providing a second control signal,
first delay means (223d) for delaying said first control signal for a first predetermined time,
second delay means (223e) for delaying said second control signal for a second predetermined time, and
selective means (223f) for selecting said first control signal in response to said first selective control signal and for selecting said second control signal in response to said second selective control signal and providing a selected control signal to said ambient air temperature storage means (222).

4. The device of claim 1 wherein said adjustment means (223) comprising
first delay means for delaying said ambient air temperature data for a first predetermined time,
second delay means for delaying said ambient air temperature data for a second predetermined time,
maintaining means for maintaining a predetermined temperature change rate,
adding means for adding said predetermined temperature change rate to said ambient air temperature and providing a first control signal,
deduction means for deducting said predetermined temperature change rate from said ambient air temperature and providing a second control signal,
selective means for selecting said first control signal in response to said first selective control signal and for selecting said second control signal in response to said second selective control signal and providing a selected control signal to said ambient air temperature storage means.

5. The device of claims 3 and 4 wherein said first predetermined time is longer than said second predetermined time.

6. The device of claim 1 wherein said adjustment means comprising
first maintaining means for maintaining a first predetermined temperature change rate,
second maintaining means for maintaining a second predetermined temperature change rate,
adding means for adding said first predetermined temperature change rate to said ambient air temperatures data and providing a first control signal,
deduction means for deducting said second predetermined temperature change rate from said ambient air temperature data and providing a second control signal,
selective means for selecting said first control signals in response to said first selective control signal and for selecting said second control signal in response to said second selective control signal and providing a selected control signal,
delay means for delaying said selected control signal for a predetermined time and providing said selected control signal to said ambient air temperature storage means.

7. The device of claim 1 wherein said adjustment means comprising
delay means for delaying said ambient air temperature data for a predetermined time and providing a first control signal,
first maintaining means for maintaining a first predetermined temperature change rate,
second maintaining means for maintaining a second predetermined temperature change rate,
adding means for adding said first predetermined temperature change rate to said first control signal and providing a second control signal,
deduction means for deducting said second predetermined temperature change rate from said second control signal and providing a third control signal,
selective means for selecting said second control signal in response to said first selective control signal and for selecting said third control signal in response to said second selective control signal and providing a selected control signal to said ambient air temperature storage means.

8. The device of claims 6 and 7 wherein said first predetermined temperature change rate is less than said second predetermined temperature change rate.

9. The device of claim 1 wherein adjustment means comprising
maintaining means for maintaining a predetermined temperature change rate,
adding means for adding said predetermined temperature change rate to said ambient air temperature data and providing a first control signal,
delay means for delaying said first control signal for a predetermined time and providing a second control signal,
selective means for selecting said second control signal in response to said first selective control signal and for selecting said control signal from said ambient air temperature sensor means in response to said second selective control signal and providing a selected control signal to said ambient air temperature storage means.

10. The device of claim 1 wherein said adjustment means comprising
delay means for delaying said ambient air temperature data for a predetermined time and providing a first control signal,
maintaining means for maintaining a predetermined temperature change rate,
adding means for adding said predetermined temperature change rate to said first control signal and providing a second control signal,
selective means for selecting said second control signal in response to said first selective control signal and for selecting said control signal from said ambient air temperature sensor means in response to said second selective control signal and providing said adjusted ambient air temperature data to said ambient air temperature storage means.

## Patentansprüche

1. Vorrichtung zum Steuern eines Öffnungswinkels einer in einer Kraftfahrzeugklimaanlage benutzten Luftmischklappe (16) mit einem Betätigungselement zum Betätigen der Luftmischklappe (16) und einem Gebläse (13) zum Blasen von Luft, mit
Umgebungslufttemperatursensormittel (241), das auf einem vorderen Teil des Kraftfahrzeuges zum Erfassen einer Umgebungslufttemperatur außerhalb des Kraftfahrzeuges vorgesehen ist,
gekennzeichnet weiter durch:
Berechnungsmittel zum Berechnen eines Umgebungsluftwertes, der zum Steuern des Betätigungselementes und des Gebläses benutzt wird, mit
Umgebungslufttemperaturspeichermittel (222) zum Speichern des Umgebungslufttemperaturwertes,
Vergleichsmittel (221) zum Vergleichen einer von dem Sensormittel erfaßten Umgebungslufttempereatur mit dem gespeicherten Umgebungstemperaturluftwert und Vorsehen eines ersten selektiven Steuersignales, wenn die erfaßte Umgebungslufttemperatur größer als der gespeicherte Umgebungslufttemperaturwert ist, und eines zweiten selektiven Steuersignales, wenn die erfaßte Umgebungslufttemperatur kleiner als der gespeicherte Umgebungslufttemperaturwert ist, und
Einstellmittel (223) zum Einstellen des Umgebungslufttemperaturwertes mit einer ersten Reaktionsgeschwindigkeit als Reaktion auf das erste selektive Steuersignal und einer zweiten Reaktionsgeschwindigkeit als Reaktion auf das zweite selektive Steuersignal und Vorsehen des eingestellten Umgebungslufttemperaturwertes für das Umgebungslufttemperaturspeichermittel (222).

2. Vorrichtung nach Anspruch 1, bei der die erste Reaktionsgeschwindigkeit kleiner als die zweite Reaktionsgeschwindigkeit ist.

3. Vorrichtung nach Anspruch 1 oder 2, bei der das Einstellmittel (223) aufweist:
Aufrechterhaltungsmittel (223a) zum Aufrechterhalten einer vorbestimmten Temperaturänderungsrate,
Addiermittel (223b) zum Addieren der vorbestimmten Temperaturänderungsrate zu dem Umgebungslufttemperaturwert und Vorsehen eines ersten Steuersignales,
Ableitungsmittel (223c) zum Ableiten der vorbestimmten Temperaturänderungsrate aus dem Umgebungslufttemperaturwert und Vorsehen eines zweiten Steuersignales,
erstes Verzögerungsmittel (223d) zum Verzögern des ersten Steuersignales um eine erste vorbestimmte Zeit,
zweites Verzögerungsmittel (223e) zum Verzögern des zweiten Steuersignales um eine zweite vorbestimmte Zeit und
Auswahlmittel (223f) zum Auswählen des ersten Steuersignales als Reaktion auf das erste selektive Steuersignal und zum Auswählen des zweiten Steuersignales als Reaktion auf das zweite selektive Steuersignal und Vorsehen eines ausgewählten Steuersignales für das Umgebungslufttemperaturspeichermittel (222).

4. Vorrichtung nach Anspruch 1, nach der das Einstellmittel (223) aufweist:
erstes Verzögerungsmittel zum Verzögern des Umgebungslufttemperaturwertes um eine erste vorbestimmte Zeit,
zweites Verzögerungsmittel zum Verzögern des Umgebungslufttemperaturwertes um eine zweite vorbestimmte Zeit,
Aufrechterhaltungsmittel zum Aufrechterhalten einer vorbestimmten Temperaturänderungsrate,
Addiermittel zum Addieren der vorbestimmten Temperaturänderungsrate zu der Umgebungslufttemperatur und Vorsehen eines ersten Steuersignales,
Ableitungsmittel zum Ableiten der vorbestimmten Temperaturänderungsrate aus der Umgebungslufttemperatur und Vorsehen eines zweiten Steuersignales,
Auswahlmittel zum Auswählen des ersten Steuersignales als Reaktion auf das erste selektive Steuersignal und zum Auswählen des zweiten Steuersignales als Reaktion auf das zweite selektive Steuersignal und Vorsehen eines ausgewählten Steuersignales für das Umgebungslufttemperaturspeichermittel.

5. Vorrichtung nach Anspruch 3 und 4, bei der die erste vorbestimmte Zeit länger als die zweite vorbestimmte Zeit ist.

6. Vorrichtung nach Anspruch 1, bei der das Einstellmittel aufweist
erstes Aufrechterhaltungsmittel zum Aufrechterhalten einer ersten vorbestimmten Temperaturänderungsrate,
zweites Aufrechterhaltungsmittel zum Aufrechterhalten einer zweiten vorbestimmten Temperaturänderungsrate,
Addiermittel zum Addieren der ersten vorbestimmten Temperaturänderungsrate zu dem Umgebungslufttemperarturwert und Vorsehen eines ersten Steuersignales,
Ableitungsmittel zum Ableiten der zweiten vorbestimmten Temperaturänderungsrate aus dem Umgebungslufttemperaturwert und Vorsehen eines zweiten Steuersignales,
Auswahlmittel zum Auswählen des ersten Steuersignales als Reaktion auf das erste selektive Steuersignal und zum Auswählen des zweiten Steuersignales als Reaktion auf das zweite selektive Steuersignal und Vorsehen eines ausgewählten Steuersignales,
Verzögerungsmittel zum Verzögern des ausgewählten Steuersignales um eine vorbestimmte Zeit und Vorsehen des ausgewählten Steuersignales für das Umgebungslufttemperaturspeichermittel.

7. Vorrichtung nach Anspruch 1, bei der das Einstellmittel aufweist
Verzögerungsmittel zum Verzögern des Umgebungslufttemperaturwertes um eine vorbestimmte Zeit und Vorsehen eines ersten Steuersignales,
erstes Aufrechterhaltungsmittel zum Aufrechterhalten einer ersten vorbestimmten Temperaturänderungsrate,
zweites Aufrechterhaltungsmittel zum Aufrechterhalten einer zweiten vorbestimmten Temperaturänderungsrate,
Addiermittel zum Addieren der ersten vorbestimmten Temperaturänderungrate zu dem ersten Steuersignal und Vorsehen eines zweiten Steuersignales,
Ableitungsmittel zum Ableiten der zweiten vorbestimmten Temperaturänderungsrate aus dem zweiten Steuersignal und Vorsehen eines dritten Steuersignales,
Auswahlmittel zum Auswählen des zweiten Steuersignales als Reaktion auf das erste selektive Steuersignal und zum Auswählen des dritten Steuersignales als Reaktion auf das zweite selektive Steuersignal und Vorsehen eines ausgewählten Steuersignales für das Umgebungslufttemperaturspeichermittel.

8. Vorrichtung nach Anspruch 6 und 7, bei der die erste vorbestimmte Temperaturänderungsrate kleiner als die zweite vorbestimmte Temperaturänderungsrate ist.

9. Vorrichtung nach Anspruch 1, bei der das Einstellmittel aufweist
Aufrechterhaltungsmittel zum Aufrechterhalten einer vorbestimmten Temperaturänderungsrate,
Addiermittel zum Addieren der vorbestimmten Temperaturänderungsrate zu dem Umgebungslufttemperaturwert und Vorsehen eines ersten Steuersignales,
Verzögerungsmittel zum Verzögern des ersten Steuersignales um eine vorbestimmte Zeit und Vorsehen eines zweiten Steuersignales,
Auswahlmittel zum Auswählen des zweiten Steuersignales als Reaktion auf das erste selektive Steuersignal und zum Auswählen des Steuersignales von dem Umgebungslufttemperatursensormittel als Reaktion auf das zweite selektive Steuersignal und Vorsehen eines ausgewählten Steuersignales für das Umgebungslufttemperaturspeichermittel.

10. Vorrichtung nach Anspruch 1, bei der das Einstellmittel aufweist
Verzögerungsmittel zum Verzögern des Umgebungslufttemperaturwertes um eine vorbestimmte Zeit und Vorsehen eines ersten Steuersignales,
Aufrechterhaltungsmittel zum Aufrechterhalten einer vorbestimmten Temperaturänderungsrate,
Addiermittel zum Addieren der vorbestimmten Temperaturänderungsrate zu dem ersten Steuersignal und Vorsehen eines zweiten Steuersignales,
Auswahlmittel zum Auswählen des zweiten Steuersignales als Reaktion auf das erste selektive Steuersignal und zum Auswählen des zweiten Steuersignales von dem Umgebungslufttemperatursensormittel als Reaktion auf das zweite selektive Steuersignal und Vorsehen des eingestellten Umgebungslufttemperaturwertes für das Umgebungsluftspeichermittel.

## Revendications

1. Dispositif pour commander un angle d'ouverture d'un humidificateur mélangeur d'air (16) utilisé dans un système de conditionnement d'air d'automobile, comprenant un actionneur pour manoeuvrer l'humidificateur mélangeur d'air (16) et un ventilateur (13) pour souffler de l'air, ledit dispositif comprenant :
un moyen détecteur (241) de la température de l'air ambiant installé à la partie avant de l'automobile pour détecter une température de l'air ambiant à l'extérieur de l'automobile, et
caractérisé en ce que ledit dispositif comprend en outre
des moyens de calcul pour calculer des données de température de l'air ambiant servant à commander ledit actionneur et ledit ventilateur, lesdits moyens de calcul comprenant :
des moyens de mémoire (222) de la température de l'air ambiant pour mémoriser lesdites données de température de l'air ambiant,
des moyens de comparaison (221) pour comparer une température de l'air ambiant, détectée par ledit moyen détecteur, auxdites données de température de l'air ambiant mémorisées et pour former un premier signal de commande sélective lorsque ladite température détectée de l'air ambiant est supérieure auxdites données de température de l'air ambiant mémorisées et un second signal de commande sélective lorsque ladite température de l'air ambiant détectée est inférieure auxdites données de température de l'air ambiant mémorisées, et
des moyens de réglage (223) pour ajuster lesdites données de température de l'air ambiant avec une première vitesse de réponse en réponse audit premier signal de commande sélective et avec une seconde vitesse de réponse en réponse audit second signal de commande sélective et pour fournir lesdites données ajustées de température de l'air ambiant auxdits moyens de mémoire de température de l'air ambiant (222).

2. Dispositif selon la revendication 1, dans lequel ladite première vitesse de réponse est inférieure à ladite seconde vitesse de réponse.

3. Dispositif selon l'une des revendications 1 ou 2, dans lequel lesdits moyens de réglage (223) comprennent :
des moyens de maintien (223a) pour maintenir une vitesse prédéterminée de variation de température,
des moyens d'addition (223b) pour ajouter ladite vitesse prédéterminée de changement de température auxdites données de température de l'air ambiant et former un premier signal de commande, des moyens de déduction (223c) pour établir ladite vitesse de variation prédéterminée de température à partir desdites données de température de l'air ambiant et former un second signal de commande,
des premiers moyens de retard (223d) pour retarder ledit premier signal de commande d'un premier temps prédéterminé,
des seconds moyens de retard (223e) pour retarder ledit second signal de commande d'un second temps prédéterminé, et
des moyens sélectifs (223f) pour sélectionner ledit premier signal de commande en réponse audit premier signal de commande sélective et pour sélectionner ledit second signal de commande en réponse audit second signal de commande sélective et fournir un signal de commande sélectionné auxdits moyens de mémoire (222) de température de l'air ambiant.

4. Dispositif selon la revendication 1, dans lequel lesdits moyens de réglage (223) comprennent :
un premier moyen de retard pour retarder lesdites données de température de l'air ambiant d'un premier temps prédéterminé,
des seconds moyens de retard pour retarder lesdites données de température de l'air ambiant d'un second temps prédéterminé,
des moyens de maintien pour maintenir une vitesse prédéterminée de variation de température,
des moyens d'addition pour ajouter ladite vitesse de variation prédéterminée de température à ladite température de l'air ambiant et former un premier signal de commande,
des moyens de déduction pour déduire ladite vitesse de variation prédéterminée de température à partir de ladite température de l'air ambiant et former un second signal de commande,
des moyens sélectifs pour sélectionner ledit premier signal de commande en réponse audit premier signal de commande sélective et pour sélectionner ledit second signal de commande en réponse audit second signal de commande sélective et appliquer un signal de commande sélectionné auxdits moyens de mémoire de température de l'air ambiant.

5. Dispositif selon l'une des revendications 3 et 4, dans lequel ledit premier temps prédéterminé est plus long que ledit second temps prédéterminé.

6. Dispositif selon la revendication 1, dans lequel lesdits moyens de réglage comprennent :
des premiers moyens de maintien pour maintenir une première vitesse de variation prédéterminée de température,
des seconds moyens de maintien pour maintenir une seconde vitesse de variation prédéterminée de température,
des moyens d'addition pour ajouter ladite première vitesse de variation prédéterminée de température auxdites données de température de l'air ambiant et former un premier signal de commande,
des moyens de déduction pour déduire ladite seconde vitesse de variation prédéterminée de température à partir desdites données de température de l'air ambiant et former un second signal de commande,
des moyens sélectifs pour sélectionner ledit premier signal de commande en réponse audit premier signal de commande sélective et pour sélectionner ledit second signal de commande en réponse audit second signal de commande sélective et fournir un signal de commande sélectionné,
des moyens à retard pour retarder ledit signal de commande sélectionné pendant un temps prédéterminé et appliquer ledit signal de commande sélectionné auxdits moyens de mémoire de température de l'air ambiant.

7. Dispositif selon la revendication 1, dans lequel lesdits moyens de réglage comprennent :
des moyens à retard pour retarder lesdites données de température de l'air ambiant pendant un temps prédéterminé et former un premier signal de commande,
des premiers moyens de maintien pour maintenir une première vitesse de variation prédéterminée de température,
des seconds moyens de maintien pour maintenir une seconde vitesse de variation prédéterminée de température,
des moyens d'addition pour ajouter ladite première vitesse de variation prédéterminée de température audit premier signal de commande et former un second signal de commande,
des moyens de déduction pour déduire ladite seconde vitesse de variation prédéterminée de température à partir dudit second signal de commande et former un troisième signal de commande,
des moyens sélectifs pour sélectionner ledit second signal de commande en réponse audit premier signal de commande sélective et pour sélectionner ledit troisième signal de commande en réponse audit second signal de commande sélective et appliquer un signal de commande sélectionné auxdits moyens de mémoire de température de l'air ambiant.

8. Dispositif selon l'une des revendications 6 et 7, dans lequel ladite première vitesse de variation prédéterminée de température est inférieure à ladite seconde variation de vitesse prédéterminée de température.

9. Dispositif selon la revendication 1, dans lequel les moyens de réglage comprennent :
des moyens de maintien pour maintenir une vitesse de variation prédéterminée de température,
des moyens d'addition pour ajouter ladite vitesse de variation prédéterminée de température auxdites données de température de l'air ambiant et former un premier signal de commande,
des moyens à retard pour retarder ledit premier signal de commande d'un temps prédéterminé et former un second signal de commande,
des moyens sélectifs pour sélectionner ledit second signal de commande en réponse audit premier signal de commande sélective et pour sélectionner ledit second signal venant dudit moyen détecteur de température de l'air ambiant en réponse audit second signal de commande sélective et appliquer un signal de commande sélectionné auxdits moyens de mémoire de température de l'air ambiant.

10. Dispositif selon la revendication 1, dans lequel lesdits moyens de réglage comprennent :
des moyens à retard pour retarder lesdites données de température de l'air ambiant pendant un temps prédéterminé et former un premier signal de commande,
des moyens de maintien pour maintenir une vitesse de variation prédéterminée de température,
des moyens d'addition pour ajouter ladite vitesse de variation prédéterminée de température audit premier signal de commande et former un second signal de commande,
des moyens sélectifs pour sélectionner ledit second signal de commande en réponse audit premier signal de commande sélective et pour sélectionner ledit signal de commande provenant dudit moyen détecteur de température de l'air ambiant en réponse audit second signal de commande sélective et appliquer lesdites données ajustées de température de l'air ambiant auxdits moyens de mémoire de température de l'air ambiant.
